# FASCICULE DE BREVET EUROPEEN

(11) **EP 4 389 489 B1**
(45) Date de publication et mention de la délivrance du brevet: **02.09.2026**
(21) Numéro de dépôt: 22857519.7
(22) Date de dépôt: 25.07.2022
(51) Int. Cl.: B60K 26/02, B60K 7/00, A01D 34/00, A01D 34/412, A01D 67/00, B62D 11/04, B60K 17/04, B62D 11/00, A01D 34/66, A01D 69/02

(54) **VÉHICULE ROULANT**
ROLLFAHRZEUG
ROLLING VEHICLE

(30) Priorité: 16.08.2021 CN 202110936088
(43) Date de publication de la demande: 26.06.2024
(73) Titulaire: Yuyao Actuator Electric Motor Co., Ltd., Yuyao City, Zhejiang Province 315420 (CN)
(72) Inventeur: LIU, Yannian, Heyuan, Guangdong (CN)
(74) Mandataire: Ipsilon
(86) Numéro de dépôt international: PCT/CN2022/107653
(87) Numéro de publication internationale: WO 2023/020206

(56) Documents cités:
- EP-A1- 3 760 021
- EP-A1- 3 797 573
- WO-A1-2020/253821
- CN-A- 105 917 841
- CN-A- 111 756 280
- US-A1- 2004 000 130
- US-A1- 2021 086 831
- US-A1- 2021 237 790

## Description

### Renvoi à des applications associées

La présente invention revendique la priorité de l'application de brevet chinois avec le numéro d'application 202110936088.8 et le titre d'invention « Engin roulant » (« Rolling vehicle »), soumis à l'administration nationale chinoise de la propriété intellectuelle (Chinese National Intellectual Property Administration) le 16 août 2021.

### Domaine technique

La présente invention concerne un engin roulant tel qu'un engin de tonte.

La présente invention concerne en particulier un engin roulant comprenant un châssis équipé d'au moins une paire de roues motrices et un système de commande d'entrainement en rotation d'une ou d'au moins l'une des paires des roues motrices, ledit système de commande comprenant au moins deux moteurs et un dispositif de commande par moteur, un desdits moteurs étant capable d'entraîner l'entrainement en rotation l'une des roues motrices de la paire de roues motrices, l'autre moteur entraînant l'entrainement en rotation de l'autre roue motrice de la paire de roues motrices, chaque dispositif de commande comprenant un levier de commande du sens de rotation et de la vitesse de rotation du moteur associé audit dispositif de commande et un premier capteur, ledit levier étant monté déplaçable à l'intérieur d'une première plage de déplacement de manière guidée en déplacement sur une partie de cette première plage de déplacement, et dans ladite première plage de déplacement, étant monté mobile à pivotement autour d'un premier axe pivot pour le passage dudit levier d'un état inactif à un état actif, ce levier étant, à l'état actif, monté depuis une position dite neutre mobile à pivotement autour d'un second axe pivot suivant une première direction (dite direction en marche avant) pour une commande d'entrainement en marche avant à une vitesse variable du moteur associé et suivant une seconde direction (dite direction en marche arrière) opposée à la première direction pour une commande d'entrainement en marche arrière à une vitesse variable du moteur associé, le premier capteur étant un capteur de détection d' au moins une position ou plage de positions du levier associé à l'intérieur de la première plage de déplacement, cette position ou plage de positions formant une zone de position du levier dans laquelle tout déplacement à pivotement autour du second axe pivot du levier, qui est guidé en déplacement, est empêché.

### État de la technique

Un engin roulant selon le préambule de la revendication 1 est connu du document EP 3 797 573.

Des engins roulants, tels que les véhicules utilitaires, en particulier les véhicules de tonte, à rayon de braquage nul, encore appelés véhicules ZT, pour zero turn, sont connus comme l'illustre le brevet US 6 729 115. La présence de deux moteurs et la réalisation d'un arbre de sortie en au moins deux sections permettent de disposer d'un engin avec deux roues motrices, et ces deux roues motrices peuvent être entrainées pour tourner à des vitesses et dans des sens différents. La direction de l'engin peut ainsi s'opérer par simple changement de la vitesse de rotation des roues. En pratique, un tel engin est généralement équipé de deux leviers de commande qui commandent chacun un moteur. Quand les deux leviers sont poussés vers l'avant simultanément et avec la même force, l'engin se déplace vers l'avant en ligne droite. Quand les deux leviers sont poussés vers l'arrière simultanément et avec la même force, l'engin se déplace vers l'arrière en ligne droite et quand un levier est poussé plus que l'autre, l'engin effectue un virage. Le fait de pousser l'un des leviers vers l'avant et l'autre vers l'arrière permet de faire tourner l'engin sur lui-même. Lorsque la transmission des mouvements des leviers aux moteurs est une transmission mécanique comme illustré dans le brevet US 6729 115, l'engin est de construction complexe. Ces dernières années, des engins intégrant une électronique de commande se sont développés. La difficulté est dans ce cas de déterminer avec précision la position du levier correspondant à la position neutre du levier, cette position neutre servant de position de référence lors de la manipulation du levier pour la commande de la direction de marche et de la vitesse des roues motrices. Pour déterminer cette position neutre, une programmation individuelle de chaque engin peut être réalisée dans une usine. En pratique, l'opérateur en usine positionne le levier dans la position neutre et commande la mémorisation de cette position à l'aide d'un bouton situé au voisinage de l'unité de commande. On comprend qu'une telle procédure est consommateur de temps. En outre, une telle procédure doit être répétée en cas de changement ou de défaillance d'une partie de l'électronique de commande. En outre, des dérives dans le temps liées par exemple à l'usure de la mécanique ne peuvent pas être prises en compte.

### Résumé de l'invention

Un but de l'invention est de proposer un engin du type précité dont la conception permet de s'affranchir pendant toute la durée de vie de l'engin d'une procédure spécifique d'étalonnage de la position neutre du levier devant être réalisée par un opérateur qualifié.

Un autre but de l'invention est de proposer un engin du type précité dont la conception permet d'étalonner en temps réel et à la fréquence souhaitée la position neutre du levier, et ce de manière masquée pour l'opérateur.

A cet effet, l'invention a pour objet un engin roulant comprenant un châssis équipé d'au moins une paire de roues motrices et un système de commande de l'entraînement en rotation des roues motrices de la paire ou d'au moins l'une des paires de roues motrices, ledit système de commande comprenant au moins deux moteurs et un dispositif de commande par moteur, l'un desdits moteurs pouvant entraîner l'entraînement en rotation de l'une des roues de la paire de roues motrices et l'autre des moteurs pouvant entraîner l'entraînement en rotation l'autre des roues motrices de ladite paire de roues motrices, chaque dispositif de commande comprenant un levier de commande du sens de rotation et de la vitesse de rotation du moteur associé audit dispositif de commande et un premier capteur, ledit levier étant un levier pivotant avec un état actif et un état inactif, ledit levier étant, à l'état actif, monté pour être mobile depuis une position neutre en pivotement autour d'un premier axe pivot suivant une première direction (dite direction en marche avant) pour une commande d'entraînement en marche avant à une vitesse variable du moteur associé, et suivant une seconde direction (dite direction en marche arrière) opposée à la première direction, pour une commande d'entraînement en marche arrière à une vitesse variable du moteur associé, ce levier étant, à l'état actif et en position neutre, monté en outre mobile à pivotement autour d'un second axe pivot à l'intérieur d'une plage de déplacement, de manière guidée en déplacement sur une partie de cette plage de déplacement, pour le passage dudit levier d'un état actif à un état inactif dans lequel tout déplacement à pivotement du levier autour du premier axe pivot est empêché, le premier capteur étant un capteur de détection d'au moins une position ou plage de positions du levier associé à l'intérieur de cette plage de déplacement, cette position ou plage de positions formant une zone de position du levier dans laquelle tout déplacement à pivotement autour du premier axe pivot du levier, qui est guidé en déplacement, est empêché, chaque dispositif de commande comprenant un second capteur de détection de la position angulaire dudit levier associé autour dudit premier axe pivot, une mémoire de stockage de la position neutre dudit levier et une unité de commande configurée pour acquérir les données dudit second capteur et, à l'état actif du levier, commander la vitesse et le sens de rotation du moteur associé en fonction des données du second capteur et de la position neutre mémorisée, caractérisé en ce que l'engin comprend au moins un mode de fonctionnement d'étalonnage dans lequel l'unité de commande est configurée pour commander une mémorisation de la position neutre correspondant à une donnée fournie par le second capteur au moins en fonction des données fournies par le premier capteur. La position neutre correspond à la position angulaire du levier, prise par rapport au premier axe pivot, dans laquelle la vitesse de rotation du moteur associé est nulle, cette position du levier correspondant à la position d'inversion du sens de rotation du moteur. L'idée d'utiliser les données fournies par un premier capteur déjà présent sur l'engin à d'autres fins pour commander une mémorisation de la position neutre, c'est-à-dire le stockage dans la mémoire de stockage de la position neutre d'une donnée correspondant à une donnée fournie par un second capteur permet de réaliser cette opération de mémorisation en temps masqué pour le conducteur de l'engin. Ainsi, la mémorisation de la position neutre s'effectue en fonction des données fournies par le premier capteur qui détecte la position du levier dans une zone de position où le levier est empêché de pivoter autour du premier axe pivot. Ainsi, la position neutre est déterminée avec précision sans risque qu'un pivotement du levier autour du premier axe pivot n'interfère avec cette détermination. Le premier capteur est un capteur déjà présent sur de tels engins et est généralement utilisé comme capteur de position du levier pour détecter si le frein de stationnement (encore appelé frein à main) de l'engin est serré ou non. En pratique, le démarrage d'un tel engin n'est autorisé que si le frein à main de l'engin est serré. Les données fournies par ce premier capteur qui permettent à l'unité de commande de déterminer que le levier est dans la zone de position détectée par le premier capteur ou que le levier est déplacé dans le sens d'une entrée ou d'une sortie de la zone de position détectée par le premier capteur n'ont jusqu'à présent jamais été utilisées pour commander une mémorisation de la position neutre du levier. Il en résulte une simplification de la procédure d'étalonnage de la position neutre du levier et pas de nécessité d'un appairage en usine de la position neutre avec une position mécanique prédéterminée du levier.

Selon un mode de réalisation de l'invention, l'unité de commande est configurée pour, dans le dit mode de fonctionnement d'étalonnage, commander une mémorisation de la position neutre correspondant à une donnée fournie par le second capteur lorsque le levier est dans la zone de position détectée par le premier capteur. Dans ce mode de réalisation, au démarrage de l'engin, le levier est dans la zone de position détectée par le premier capteur. Il suffit donc, pour l'unité de commande, d'enregistrer la donnée fournie par le second capteur, cette donnée étant une valeur de la position angulaire du levier qui est considérée comme correspondant à la position neutre du levier. Le conducteur de l'engin ne s'aperçoit en aucun cas de cette mémorisation qui s'opère de manière automatique et masquée pour l'opérateur.

Selon un mode de réalisation de l'invention, l'unité de commande est configurée pour, dans le dit mode de fonctionnement d'étalonnage, commander une mémorisation de la position neutre correspondant à une donnée fournie par le second capteur lorsque le levier est déplacé dans le sens d'une sortie et/ou d'une entrée de la zone de position détectée par le premier capteur. Dans ce mode de réalisation, au démarrage de l'engin, le levier est dans la zone de position détectée par le premier capteur. Pour entraîner un déplacement de l'engin, le conducteur de l'engin déplace le levier de l'état inactif à l'état actif. Au cours de ce déplacement, le levier sort de la zone de position détectée par le premier capteur. Cette sortie qui correspond par exemple à un changement d'état du premier capteur peut être identifiée par l'unité de commande qui acquiert les données du premier capteur. Il suffit donc pour l'unité de commande d'enregistrer lors de la détection de ce changement d'état du premier capteur, la donnée fournie par le second capteur. Cette donnée est une valeur de la position angulaire du levier qui est considérée comme correspondant à la position neutre du levier. A nouveau, le conducteur de l'engin ne s'aperçoit en aucun cas de cette mémorisation qui s'opère de manière automatique et masquée pour l'opérateur. Il résulte de ce qui précède que l'unité de commande est configurée pour dans le dit mode de fonctionnement d'étalonnage commander une mémorisation de la position neutre correspondant à une donnée fournie par le second capteur lorsque le levier est dans la zone de position détectée par le premier capteur et/ou lorsque le levier est déplacé dans le sens d'une entrée ou d'une sortie de la zone de position détectée par le premier capteur.

Selon un mode de réalisation de l'invention, l'unité de commande qui est configurée pour, dans le dit mode de fonctionnement d'étalonnage, commander une mémorisation de la position neutre correspondant à une donnée fournie par le second capteur au moins en fonction des données fournies par le premier capteur est configurée pour commander ladite mémorisation si la donnée fournie par le second capteur correspond à une valeur de position angulaire du levier différente de la valeur de la position neutre précédemment mémorisée. Ainsi, l'unité de commande commande une mise à jour de la mémoire de stockage de la position neutre uniquement lorsque la donnée de position angulaire du levier par rapport au premier axe pivot fournie par le second capteur correspond à une valeur de position angulaire du levier différente de la valeur de la position neutre précédemment mémorisée (c'est-à-dire, une valeur stockée dans une mémoire de stockage de la position neutre). En variante, l'unité de commande peut commander une mémorisation de la position neutre correspondant à une donnée fournie par le second capteur au moins en fonction des données fournies par le premier capteur indépendamment de la valeur de la position neutre précédemment mémorisée. Ainsi, l'unité de commande peut commander une mémorisation de la position neutre correspondant à une donnée fournie par le second capteur au moins en fonction des données fournies par le premier capteur à la fois lorsque la donnée de position angulaire du levier par rapport au second axe pivot fournie par le second capteur correspond à une valeur de position angulaire du levier différente ou identique à la valeur de la position neutre précédemment mémorisée.

Selon un mode de réalisation de l'invention, le dit mode de fonctionnement d'étalonnage, est un mode activable/désactivable.

Selon un mode de réalisation de l'invention, l'unité de commande est configurée pour, suite à un démarrage de l'engin et à l'état activé du mode de fonctionnement d'étalonnage :
- détecter, en fonction des données fournies par le premier capteur, la position du levier par rapport à la zone de position ,
- mémoriser, lorsque le levier est dans la zone de position ou est déplacé dans le sens d'une sortie et/ou d'une entrée de la zone de position, la position neutre correspondant à une donnée fournie par le second capteur au moins si la donnée fournie par le second capteur correspond à une valeur de la position angulaire du levier différente de la position neutre mémorisée
- désactiver ledit mode de fonctionnement d'étalonnage.

Ainsi, le mode de fonctionnement d'étalonnage peut être activé par défaut au démarrage de l'engin ou être activé automatiquement au moment du démarrage de l'engin avant d'être désactivé en fonction des données fournies par le premier capteur. **Il** peut être prévu d'activer à nouveau ce mode de fonctionnement d'étalonnage à une fréquence prédéterminée pendant un cycle de fonctionnement de l'engin correspondant à la période entre le démarrage et l'arrêt de l'engin.

Selon un mode de réalisation de l'invention, le levier étant, à l'état actif, monté depuis une position neutre mobile à pivotement autour du premier axe pivot suivant une première direction (dite direction en marche avant) jusqu'à une position de fin de course en marche avant pour une commande d'entraînement en marche avant à une vitesse variable du moteur associé fonction de la position angulaire du levier par rapport à la position neutre et suivant une seconde direction (dite direction en marche arrière) opposée à la première direction jusqu'à une position de fin de course en marche arrière pour une commande d'entraînement en marche arrière à une vitesse variable du moteur associé fonction de la position angulaire du levier par rapport à la position neutre, l'engin comprend au moins une mémoire de stockage de la position de fin de course marche avant du levier et une mémoire de stockage de la position de fin de course marche arrière du levier et l'unité de commande est configurée pour, en fonction de la position neutre et des positions de fin de course marche avant et marche arrière mémorisées, établir une courbe de la vitesse. Cette configuration de l'unité de commande permet d'adapter la courbe vitesse de rotation du moteur en fonction de la position angulaire du levier à chaque modification de la position neutre mémorisée pour maintenir une progressivité de l'accélération indépendamment de la valeur de la position angulaire de la position neutre mémorisée.

Selon un mode de réalisation de l'invention, la position neutre, qui est disposée sur la trajectoire suivie par le levier, à l'état entraîné en déplacement à pivotement dudit levier autour du second axe pivot pour le passage de l'état actif à l'état inactif, correspond à la position de fin de course du levier à l'état entraîné en déplacement du levier à pivotement autour du second axe pivot pour le passage de l'état inactif à l'état actif.

Selon un mode de réalisation de l'invention, chaque dispositif de commande comprend un carter de protection partielle du levier associé, et dans le carter de protection partielle sont ménagés deux chemins de guidage du levier, ces chemins de guidage formant entre eux un T avec l'une des branches dite première branche du T formant le chemin de guidage du levier correspondant à la partie de la plage de déplacement du levier au niveau de laquelle le levier est guidé en déplacement à l'état entraîné du levier autour du second axe pivot et l'autre branche du T formant le chemin de guidage du levier à l'état entraîné du levier autour du premier axe pivot, lesdits chemins de guidage étant configurés de sorte que tout déplacement à pivotement du levier autour du premier axe pivot est empêché à l'état positionné du levier dans le chemin de guidage formé par la première branche du T, ledit levier étant, à l'état inactif, disposé dans ce premier chemin de guidage.

Selon un mode de réalisation de l'invention, le châssis comprend une extrémité avant et une extrémité arrière et un axe longitudinal s'étendant depuis l'extrémité avant en direction de l'extrémité arrière, le premier axe pivot du levier de chaque dispositif de commande s'étend transversalement à l'axe longitudinal du châssis et le second axe pivot du levier de chaque dispositif de commande s'étend parallèlement à l'axe longitudinal du châssis. Par sensiblement orthogonaux entre eux, on entend que les premier et second axes pivot du levier du dispositif de commande sont orthogonaux entre eux à plus ou moins 20° près.

Selon un mode de réalisation de l'invention, pour chaque dispositif de commande, les premier et second axes pivot du levier du dispositif de commande sont sensiblement orthogonaux entre eux. Par sensiblement parallèles entre eux, on entend que les premier et second axes pivot du levier de l'un des dispositifs de commande sont respectivement parallèles aux premier et second axes pivot du levier de l'autre des dispositifs de commande à plus ou moins 20° près.

Selon un mode de réalisation de l'invention, les premier et second axes pivot du levier de l'un des dispositifs de commande sont respectivement sensiblement parallèles aux premier et second axes pivot du levier de l'autre des dispositifs de commande. Par sensiblement parallèles, on entend parallèles à ± 20° près.

Selon un mode de réalisation de l'invention, pour au moins l'un des dispositifs de commande, le premier capteur est un capteur de proximité avec lequel le levier est, à l'état inactif, en contact d'appui en position de fin de course à l'intérieur de la plage de déplacement et en ce que le second capteur est un potentiomètre.

L'invention a pour autre objet un procédé de commande de la direction de marche et de la vitesse des roues motrices d'un engin roulant, dans lequel l'engin est du type précité, et le procédé comprend dans le dit mode de fonctionnement d'étalonnage, une étape de commande, par l'unité de commande, d'une mémorisation de la position neutre correspondant à une donnée fournie par le second capteur lorsque le levier est dans la zone de position détectée par le premier capteur ou lorsque le levier est déplacé dans le sens d'une entrée ou d'une sortie de la zone de position détectée par le premier capteur.

### Brève description des dessins

L'invention sera bien comprise à la lecture de la description suivante d'exemples de réalisation, en référence aux dessins annexés dans lesquels :
[Fig. 1] représente une vue en perspective d'un engin roulant conforme à l'invention,
[Fig. 2] représente une vue en perspective d'un engin roulant conforme à l'invention prise depuis l'arrière dudit engin,

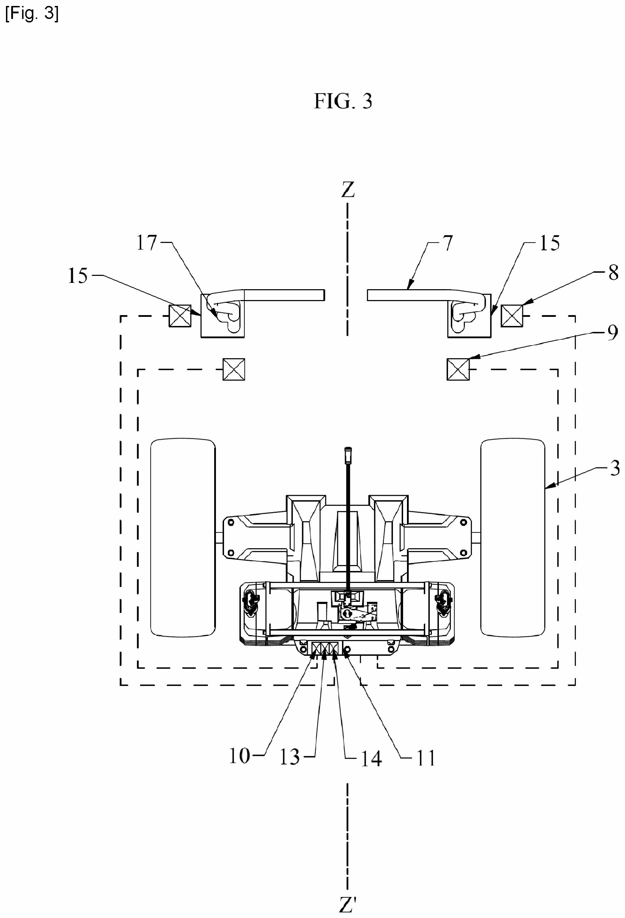

[Fig. 3] représente une vue schématique fonctionnelle du système de commande des roues d'un engin conforme à l'invention,
[Fig. 4] représente sous forme de vues en perspective associées à des vues en coupe différentes positions aptes à être prises par un levier d'un engin conforme à l'invention,
[Fig. 5] représente deux vues schématiques en coupe illustrant l'une, dans un dessin, les positions des leviers à l'état actif, dans l'autre dessin, les positions des leviers à l'état inactif,
[Fig. 6] représente sous forme de logigramme un exemple de procédé de commande de l'engin en vue d'une mémorisation éventuelle de la position neutre d'un levier de l'engin,
[Fig. 7] représente sous forme de logigramme un exemple de procédé de commande de l'engin en vue d'une mémorisation éventuelle de la position neutre d'un levier de l'engin,
[Fig. 8] représente sous forme de logigramme un exemple de procédé de commande de l'engin en vue d'une mémorisation éventuelle de la position neutre d'un levier de l'engin,
[Fig. 9] représente une courbe illustrant en ordonnée la vitesse de rotation du moteur en fonction en abscisse de la position angulaire du levier.

### Modes de réalisation particuliers

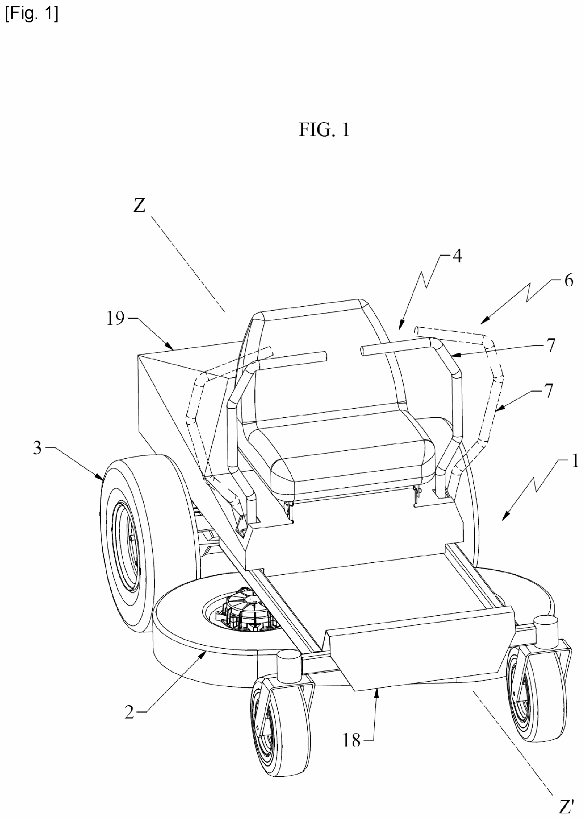

Comme mentionné ci-dessus, l'invention a pour objet un engin 1 roulant du type représenté à la figure 1. Cet engin roulant est ici un engin de tonte qui peut être équipé d'une ou plusieurs lames de coupe rotatives pour la tonte de gazon.

Cet engin 1 roulant comprend un châssis 2 porté par quatre roues d'appui au sol (à savoir deux roues avant droite et gauche et deux roues arrière droite et gauche). Au moins deux des roues à savoir au moins les deux roues avant ou au moins les deux roues arrière sont des roues 3 motrices. Dans l'exemple représenté, ce sont les roues arrière qui sont les roues 3 motrices de l'engin 1 roulant.

L'invention s'applique de manière similaire à un engin roulant équipé de deux roues avant motrices.

L'engin 1 roulant comprend encore un système 4 de commande d'entraînement en rotation des roues 3 motrices. Ce système 4 de commande comprend au moins deux moteurs 5 qui, dans les exemples représentés, sont des moteurs 5 électriques à deux sens de rotation. Les moteurs 5 auraient pu, de manière similaire, être des moteurs hydrauliques comme illustré dans le brevet US 6 729 115.

Indépendamment de leur conception, ces moteurs 5 fonctionnent indépendamment l'un de l'autre. Un de ces moteurs 5 peut donc entraîner l'entraînement en rotation de l'une de la paire de roues 3 motrices, l'autre moteur 5 peut entraîner l'entraînement en rotation de l'autre de la paire de roues motrices 3.

Dans l'exemple représenté, chaque roue 3 motrice est reliée à une section d'arbre d'un arbre de sortie formée de deux sections d'arbre coaxiales montées libres à rotation l'une par rapport à l'autre. Les deux sections d'arbre sont par exemple reliées l'une à l'autre par un manchon pour autoriser une telle indépendance en rotation. Chaque moteur électrique est relié par une transmission à au moins l'une des sections d'arbre associées pour permettre son entraînement en rotation dans un sens ou dans l'autre et par suite, l'entraînement en rotation de la roue associée. Cette transmission ne sera pas décrite en détail, car elle peut être réalisée par un simple engrenage ou par un concept plus complexe.

Dans l'exemple représenté, ce système 4 de commande comprend encore un dispositif 6 de commande par moteur 5. Le dispositif 6 de commande associé à l'un des moteurs est similaire au dispositif 6 de commande associé à l'autre des moteurs 5, de sorte qu'un seul dispositif 6 de commande sera décrit plus en détail ci-après.

Chaque dispositif 6 de commande comprend un levier 7 de commande du sens de rotation et de la vitesse de rotation du moteur associé au dispositif 6 de commande et un premier capteur 8.

Ce levier 7 est un levier pivotant qui présente un état actif et un état inactif. Ce levier 7 est, à l'état actif, monté depuis une position neutre mobile à pivotement autour d'un premier axe pivot suivant une première direction (dite direction en marche avant) pour une commande d'entraînement en marche avant à une vitesse variable du moteur associé, et suivant une seconde direction (dite direction en marche arrière) opposée à la première direction pour une commande d'entraînement en marche arrière à une vitesse variable du moteur associé.

Ce levier est, à l'état actif et en position neutre PN monté en outre mobile à pivotement autour d'un second axe pivot YY' à l'intérieur d'une plage de déplacement P1 de manière guidé en déplacement sur une partie de cette plage de déplacement P1 pour le passage dudit levier 7 de l'état actif à un état inactif dans lequel tout déplacement à pivotement du levier autour du premier axe pivot XX' est empêché.

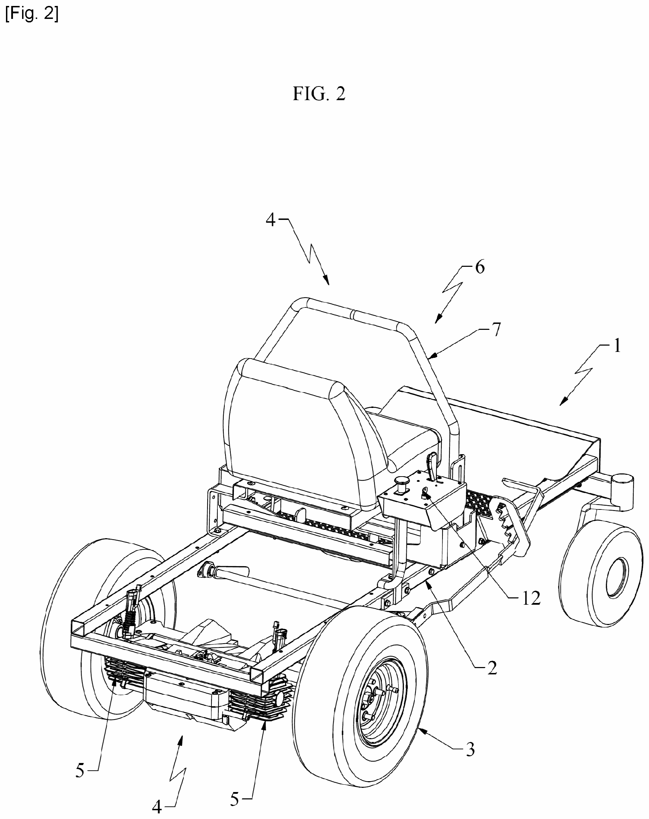

En pratique, et comme illustré aux figures 1, 2 et 5, les deux leviers 7 sont des leviers coudés qui forment chacun un demi-arceau.

En position neutre PN de chaque levier qui correspond à la position dans laquelle la vitesse de rotation du moteur associé au levier 7 est nulle, les leviers sont disposés pour être alignés les uns avec les autres et forment un arceau, comme illustré à la figure 1.

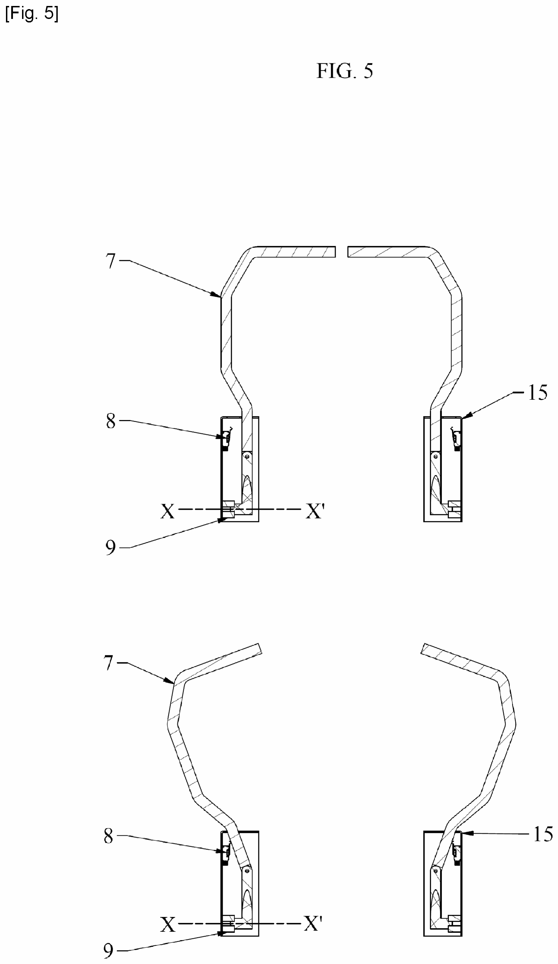

Le châssis est équipé d'un siège pour le conducteur de l'engin et l'arceau est disposé en avant du siège du conducteur de l'engin, de sorte que le conducteur de l'engin doit, pour accéder au siège de l'engin, écarter les leviers 7, ouvrant ainsi plus largement en son milieu l'arceau formé, pour autoriser l'accès au siège. Cet écartement des leviers est représenté à la figure 5.

Cet écartement des leviers 7 correspond au déplacement de chacun des leviers autour de son second axe pivot YY', pour le passage du levier de l'état actif dans lequel ledit levier est en position neutre, à l'état inactif.

Le châssis 2 comprend une extrémité avant 18 et une extrémité arrière 19 et un axe longitudinal ZZ' s'étendant depuis l'extrémité avant 18 en direction de l'extrémité arrière 19.

Le premier axe pivot XX' du levier 7 de chaque dispositif 6 de commande s'étend perpendiculairement à l'axe longitudinal ZZ' du châssis 2 et le second axe pivot YY' du levier 7 de chaque dispositif 6 de commande s'étend parallèlement à l'axe longitudinal ZZ' du châssis 2.

L'axe longitudinal du châssis correspond à la direction avant/arrière de l'engin. Ainsi, lorsqu'un levier 7 est monté mobile à pivotement autour de son premier axe pivot XX', il se déplace suivant la direction avant/arrière, c'est-à-dire en direction de l'extrémité avant ou en direction de l'extrémité arrière du châssis.

De la même manière, lorsque le levier 7 est monté mobile à pivotement autour du second axe pivot YY', le levier 7 se déplace vers la droite ou vers la gauche de l'engin, à l'état entraîné en pivotement du levier autour de ce second axe pivot YY'.

On note également que pour chaque dispositif 6 de commande, les premier et second axes pivots du levier du dispositif 6 de commande sont sensiblement orthogonaux entre eux, c'est-à-dire orthogonaux entre eux à plus ou moins 20° près. Ainsi, pour chaque dispositif 6 de commande, le premier axe pivot XX' du levier 7 est orthogonal au second axe pivot YY' du levier 7.

De même, les premier et second axes pivots du levier 7 de l'un des dispositifs 6 de commande sont respectivement sensiblement parallèles, c'est-à-dire parallèles à plus ou moins 20° près, aux premier et second axes pivots du levier 7 de l'autre des dispositifs 6 de commande. Ainsi, le premier axe pivot XX' du levier 7 de l'un des dispositifs 6 de commande est parallèle au premier axe pivot XX' du levier 7 de l'autre des dispositifs 6 de commande, tandis que le second axe pivot YY' du levier 7 de l'un des dispositifs de commande 6 est parallèle au second axe pivot YY' du levier 7 de l'autre des dispositifs 6 de commande.

Pour garantir un tel déplacement des leviers, chaque dispositif 6 de commande comprend un carter 15 de protection partielle du levier 7 associé, dans lequel sont ménagés deux chemins 16 et 17 de guidage du levier 7.

Ces chemins 16 et 17 de guidage forment entre eux un T avec l'une des branches dite une première branche du T formant le chemin 16 de guidage du levier 7 correspondant à la plage P1 de déplacement du levier 7 dans lequel chemin 16 de guidage le levier 7 est guidé en déplacement à l'état entraîné du levier 7 autour du second axe pivot YY' et l'autre branche du T forme le chemin 17 de guidage du levier 7 à l'état entraîné du levier 7 autour du premier axe pivot XX'. Ces chemins de guidage 16 et 17 sont configurés de sorte que tout déplacement à pivotement du levier 7 autour du premier axe pivot XX' est empêché, à l'état positionné du levier 7 positionné dans le chemin 16 de guidage formé par la première branche du T. Le levier 7 est, à l'état inactif, disposé dans ce premier chemin 16 de guidage.

La position neutre PN du levier est disposée sur la trajectoire suivie par le levier 7 à l'état du levier 7 entraîné en déplacement à pivotement autour du second axe pivot YY' pour le passage de l'état inactif à l'état actif. Cette position neutre correspond à la position de fin de course du levier 7 à l'état entraîné à déplacement du levier 7 à pivotement autour du second axe pivot YY' pour le passage de l'état inactif à l'état actif. Cette position neutre correspond, au niveau des chemins de guidage, à l'intersection des première et seconde branches du T à l'intérieur de la seconde branche du T.

L'engin 1 est encore équipé d'un démarreur 12.

Classiquement, au démarrage de l'engin, les leviers 7 sont dans une position écartée, c'est-à-dire pivotés autour du second axe pivot YY' pour occuper un état inactif.

Le premier capteur 8 est un capteur de détection d'au moins une position ou plage de position du levier 7 à l'intérieur de la plage P1 de déplacement du levier 7.

La plage P1 de déplacement correspond au trajet suivi par le levier 7 pour le passage de l'état actif à l'état inactif et inversement. La position ou plage de position du levier 7 détectée par le premier capteur 8 forme une zone de position ZP pouvant encore être appelée zone de positionnement du levier 7 à l'intérieur de la plage P1 de déplacement du levier 7.

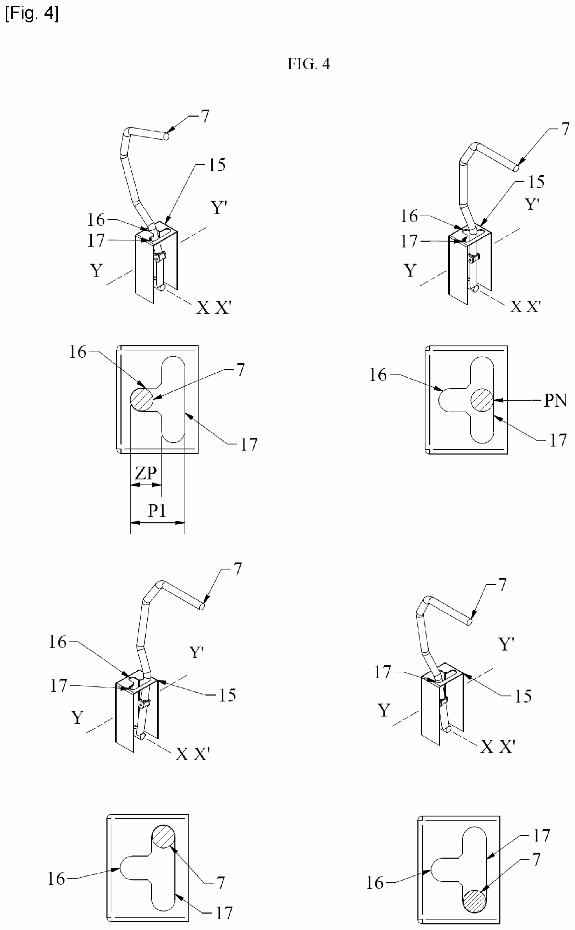

Cette zone de position ZP correspond à une zone dans laquelle tout déplacement du levier 7 à pivotement autour du premier axe pivot XX' est empêché. Cette zone de position ZP correspond à toute ou partie de la partie de la plage de déplacement P1 au niveau de laquelle le levier 7 est guidé en déplacement, c'est-à-dire à toute ou partie de la première branche du T formant le chemin 16 de guidage. Dans les exemples représentés, ce premier capteur 8 est un capteur de proximité avec lequel le levier 7 est à l'état inactif, en contact d'appui en position de fin de course à l'intérieur de la plage P1 de déplacement. Ainsi, dans les exemples représentés à la figure 4, ce premier capteur 8 est disposé sur le carter, à l'aplomb et au-dessous de l'extrémité de la première branche du T, matérialisant la fin de course du levier 7 à l'état inactif.

Pour certaines familles d'engin, ce premier capteur 8 est classiquement implanté sur ledit engin 1 à d'autres fins. Ce premier capteur 8 permet en particulier de n'autoriser le démarrage de l'engin que dans une position du levier 7 dans laquelle, une fois l'engin 1 démarré, un avancement immédiat de l'engin 1 résultant de la position du levier 7 est impossible.

L'invention conserve cette première fonction du premier capteur 8, mais confère à ce premier capteur 8 une seconde fonction permettant, à l'aide de ce premier capteur 8, d'aider au repérage et à la mémorisation de la position neutre PN du levier 7. En effet, chaque dispositif 6 de commande comprend un second capteur 9 de détection de la position angulaire du levier 7 associée autour dudit premier axe pivot XX', une mémoire 10 de stockage de la position neutre PN dudit levier 7 et une unité 11 de commande configurée pour acquérir les données dudit second capteur 9 et pour, à l'état actif du levier 7, commander la vitesse et le sens de rotation du moteur 5 associé, en fonction des données du second capteur 9 et de la position neutre PN mémorisée.

L'unité de commande se présente sous la forme d'un système électronique et informatique qui comprend par exemple un microprocesseur et une mémoire de travail. Selon un aspect particulier, l'unité de commande peut se présenter sous la forme d'un automate programmable.

Autrement dit, les fonctions et étapes décrites peuvent être mises en œuvre sous forme de programme informatique ou via des composants matériels (p. ex. des réseaux de portes programmables). En particulier, les fonctions et étapes opérées par l'unité de commande ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que l'unité, ou un ou plusieurs moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Dans les exemples représentés, le second capteur 9 est un potentiomètre disposé au niveau du premier axe pivot XX'. Ce second capteur 9 permet de mesurer en continu la position angulaire du levier 7 par rapport à la position neutre PN autour du premier axe pivot XX'.

Le levier est ainsi, à l'état actif, monté pour être mobile depuis la position neutre PN par pivotement autour du premier axe pivot suivant une première direction (dite direction en marche avant) jusqu'à une position de fin de cours en marche avant pour une commande d'entraînement en marche avant à une vitesse variable du moteur 5 associé, en fonction de la position angulaire du levier 7 par rapport à la position neutre PN et suivant une seconde direction (dite direction en marche arrière) opposée à la première direction jusqu'à une position de fin de course en marche arrière pour une commande d'entraînement en marche arrière à une vitesse variable du moteur 5 associé, fonction de la position angulaire du levier par rapport à la position neutre PN.

L'engin peut encore comprendre au moins une mémoire 13 de stockage de la position de fin de course marche avant du levier 7 et une mémoire 14 de stockage de la position de fin de course marche arrière du levier 7.

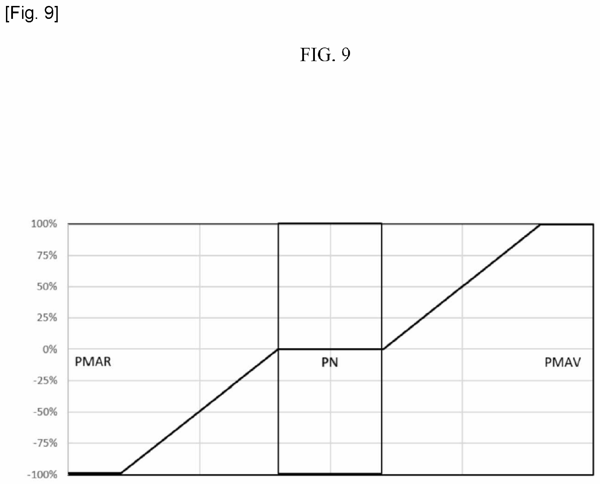

L'unité de commande 11 est configurée pour, en fonction de la position neutre et des positions de fin de course marche avant et marche arrière mémorisées, établir une courbe de la vitesse de rotation du moteur en fonction de la position angulaire du levier 7 comme illustré à la figure 9 où l'abscisse correspond à la position angulaire du levier et l'ordonnée correspond par convention à la vitesse de rotation du moteur avec 0 % correspondant à la position neutre, c'est-à-dire à la vitesse nulle du moteur et 100 % et -100 % correspondant respectivement aux vitesses maximales en marche avant et en marche arrière du moteur. Ainsi, à chaque fois, lorsque le levier 7 est à l'état actif et est déplacé vers l'extrémité avant du châssis à partir de la position neutre, le second capteur renvoie une tension électrique correspondant à l'angle du levier 7 par rapport à la position neutre.

De la même manière, lorsque le levier 7 est entraîné en déplacement par le conducteur de l'engin vers l'extrémité arrière du châssis depuis la position neutre, le second capteur renvoie une tension électrique correspondant à l'angle du levier par rapport à la position neutre PN et l'unité de commande commande le fonctionnement des moteurs électriques et, en particulier, leur vitesse de rotation en fonction des informations reçues à partir du second capteur.

En position neutre PN du levier 7, la valeur de la position angulaire du levier 7 par rapport au premier axe pivot XX' mesurée par le second capteur 9 ne varie pas au cours du passage du levier 7 de l'état actif dans lequel il est en position neutre à l'état inactif.

De ce fait, l'engin 1 comprend au moins un dit mode de fonctionnement d'étalonnage dans lequel l'unité de commande 11 est configurée pour commander une mémorisation de la position neutre PN correspondant à une donnée fournie par le second capteur 9, au moins en fonction des données fournies par le premier capteur 8.

En pratique, l'unité de commande 11 est configurée pour, dans le dit mode de fonctionnement d'étalonnage, commander une mémorisation de la position neutre PN correspondant à une donnée fournie par le second capteur 9 lorsque le levier 7 est dans la zone de position ZP détectée par le premier capteur 8 ou lorsque le levier 7 est déplacé dans le sens d'une entrée ou d'une sortie de la zone de position ZP détectée par le premier capteur 8.

La mémorisation de la position neutre PN correspondant à une donnée fournie par le second capteur 9 lorsque le premier capteur 8 détecte que le levier 7 est dans la zone de position PN détectée par le premier capteur 8 ou que le levier 7 entre dans ou sort de la zone de position PN détectée par le premier capteur 8, ce qui se traduit par un changement d'état du premier capteur 8, peut être systématique ou non. En effet, l'unité de commande 11 peut commander systématiquement la mémorisation de la position neutre PN en fonction des données fournies par le premier capteur 8 ou ne commander cette mémorisation que si la donnée fournie par le second capteur 9 correspond à une valeur de position angulaire du levier 7 différente de la valeur de la position neutre précédemment mémorisée, c'est-à-dire stockée en mémoire dans la mémoire 10 de position neutre.

Dans les exemples représentés, le mode de fonctionnement d'étalonnage est un mode activable/désactivable. La désactivation du mode de fonctionnement d'étalonnage est commandée par l'unité de commande 11. Il peut en être de même d'un mode d'activation. Le mode d'activation peut également être un mode d'activation par défaut au moment du démarrage de l'engin 1.

Quelles que soient les conditions d'activation du mode de fonctionnement d'étalonnage, l'unité de commande 11 est configurée pour, suite à un démarrage de l'engin 1 et à l'état activé du mode de fonctionnement d'étalonnage
- détecter en fonction des données fournies par le premier capteur 8 la position du levier 7 par rapport à la zone de position ZP,
- mémoriser lorsque le levier 7 est dans la zone de position ZP ou est déplacé dans le sens d'une entrée dans ou d'une sortie de la zone de position ZP, la position neutre PN correspondant à une donnée fournie par le second capteur 9, au moins si la donnée fournie par le second capteur 9 correspond à une valeur de la position angulaire du levier 7 différente de la position neutre mémorisée,
- désactiver ledit mode de fonctionnement d'étalonnage.

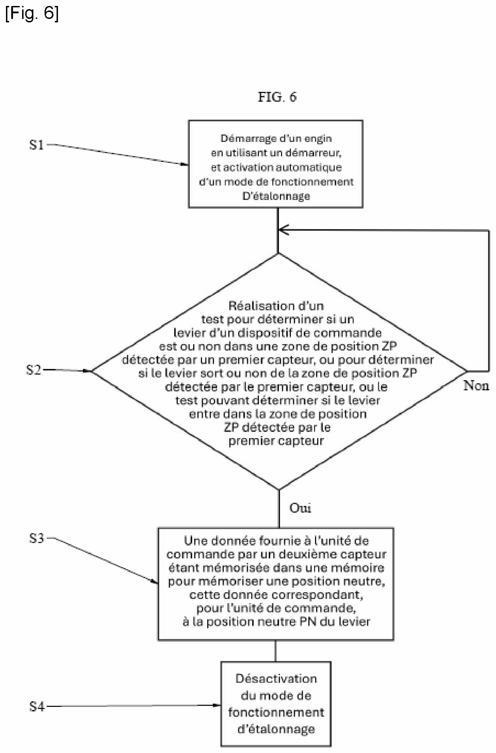

Les figures 6 à 8 illustrent différents scénarii.

La figure 6 illustre le scénario le plus simple. À l'étape S1, l'engin 1 est démarré à l'aide du démarreur 12 et le mode de fonctionnement d'étalonnage est automatiquement activé. Au démarrage de l'engin 1, chaque levier 7 est nécessairement à l'état inactif et dans la zone de position ZP détectée par le premier capteur 8, sans quoi l'engin n'aurait pas démarré.

La figure 6 illustre un scénario pour un dispositif de commande. Ce scénario est le même pour l'autre dispositif de commande. Les deux scénarii se déroulent indépendamment l'un de l'autre. Chaque dispositif de commande est apte à suivre un tel scénario.

À l'étape S2, il est testé si le levier du dispositif de commande est dans la zone de position ZP détectée par le premier capteur 8 ou en variante, si le levier 7 sort de la zone de position ZP détectée par le premier capteur 8. En variante encore, il aurait pu être testé si le levier entre dans la zone de position ZP détectée par le premier capteur 8.

Si la réponse est oui, à l'étape S3, la donnée fournie à l'unité de commande par le second capteur 9 qui correspond, pour l'unité de commande 11, à la position neutre PN du levier 7 est mémorisée dans la mémoire 10 de stockage de la position neutre. À l'étape S4, le mode de fonctionnement d'étalonnage est désactivé.

Si la réponse du test de l'étape S2 est non, il est procédé à une répétition du test de l'étape S2.

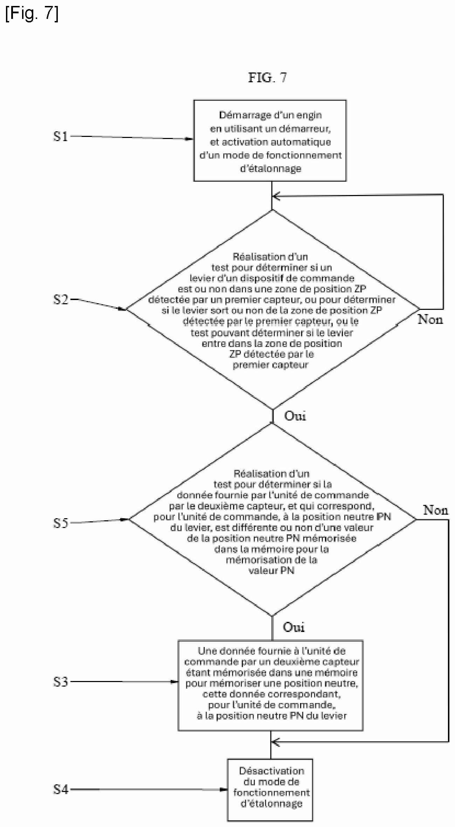

Le scénario de la figure 7 reproduit les étapes S1 à S4 de la figure 6 et se distingue de ce scénario de la figure 6 par le fait qu'entre l'étape S2 et l'étape S3, il est exécuté une étape S5 au cours de laquelle il est testé si la donnée fournie à l'unité de commande 11 par le second capteur 9, et qui correspond, pour l'unité de commande 11, à la position neutre PN du levier 7 est différente de la valeur de la position neutre PN mémorisée dans la mémoire 10 de stockage de la valeur PN.

Si la réponse est oui, alors on passe à l'étape S3. Sinon, on passe directement à l'étape S4.

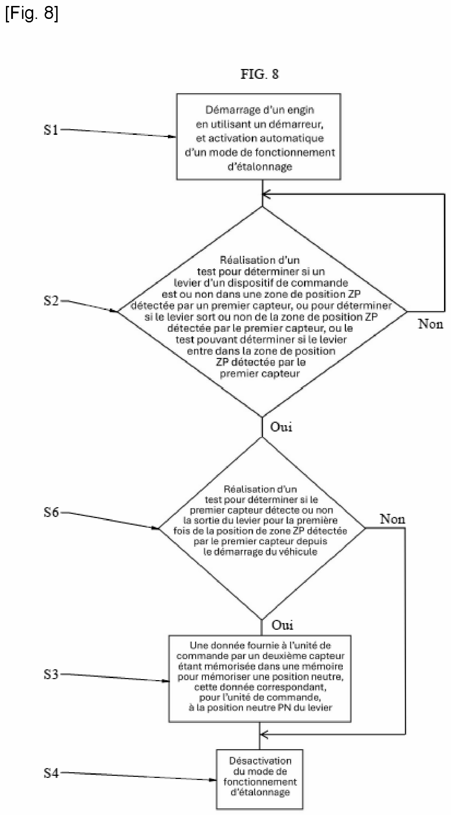

La figure 8 illustre un autre scénario, qui répète les étapes S1 à S4 du scénario de la figure 6, et dans lequel il est rajouté une étape S6 intercalée entre les étapes S2 et S3. À cette étape S6, il est testé si le premier capteur 8 détecte pour la première fois la sortie du levier 7 de la zone de position ZP détectée par le premier capteur 8 depuis le démarrage de l'engin 1.

Ce test peut en pratique s'opérer par comparaison des données fournies par un compteur qui compte le nombre de fois où le premier capteur change d'état avec les données fournies par second compteur qui compte le nombre de démarrages de l'engin. En fonction du résultat de cette comparaison, l'unité de commande 11 peut déterminer si le levier sort de la zone de position ZP détectée par le capteur 8 pour la première fois ou non depuis le démarrage de l'engin.

Si la réponse à cette question est « oui », l'unité de commande passe à l'étape S7. Sinon, l'unité de commande 11 passe à l'étape S4.

Bien évidemment, d'autres scénarii, qui peuvent comprendre notamment une combinaison des scénarii décrits ci-dessus, peuvent être envisagés.

Indépendamment de la valeur de la position **PN** mémorisée, le fonctionnement d'un tel engin à l'état actif des leviers 7 est identique à celui de l'état de la technique.

En particulier, quand les deux leviers 7 qui sont à l'état actif sont poussés vers l'avant simultanément et avec la même force depuis leur position neutre respective, l'engin se déplace vers l'avant. Quand les deux leviers 7 sont poussés vers l'arrière simultanément et avec la même force depuis leur position neutre respective, l'engin se déplace vers l'arrière. Quand un levier est poussé plus que l'autre, l'engin effectue un virage. Le fait de pousser l'un des leviers vers l'avant et l'autre vers l'arrière permet de faire tourner l'engin sur lui-même.

Le passage d'un levier de l'état actif à l'état inactif empêche tout entraînement en rotation de la roue associée.

La possibilité à tout moment, choisie par le fabricant de l'engin, et en particulier à chaque démarrage de l'engin, de mettre à jour la position neutre mémorisée permet une conduite de l'engin de manière plus confortable. Cette fonction permet une recalibration automatique au cours de la vie de fonctionnement de l'engin de la position neutre, ainsi qu'une possibilité d'enlever un appairage lors de la fabrication de l'engin, de manière à avoir un fonctionnement optimal dudit engin.

Cette possibilité permet également d'éviter un passage en usine lorsque le deuxième capteur doit être changé.

## Revendications

1. Engin (1) roulant comprenant un châssis (2) équipé d'au moins une paire de roues (3) motrices et un système (4) de commande d'entraînement en rotation des roues motrices de la paire ou d'au moins l'une des paires de roues (3) motrices, ledit système (4) de commande comprenant au moins deux moteurs (5) et un dispositif (6) de commande par moteur (5), l'un desdits moteurs (5) pouvant entraîner l'entraînement en rotation de l'une des roues de la paire de roues (3) motrices et l'autre des moteurs (5) pouvant entraîner l'entraînement en rotation l'autre des roues (3) motrices de ladite paire de roues motrices, chaque dispositif (6) de commande comprenant un levier (7) de commande du sens de rotation et de la vitesse de rotation du moteur (5) associé audit dispositif (6) de commande et un premier capteur (8), ledit levier (7) étant un levier pivotant avec un état actif et un état inactif, ledit levier (7) étant, à l'état actif, monté pour être mobile depuis une position dite neutre (PN) par pivotement autour d'un premier axe pivot (XX') suivant une première direction, qui est une direction en marche avant, pour une commande d'entraînement en marche avant à une vitesse variable du moteur (5) associé, et suivant une seconde direction, qui est une direction en marche arrière, opposée à la première direction, pour une commande d'entraînement en marche arrière à une vitesse variable du moteur (5) associé, ce levier (7) étant, à l'état actif et en position neutre (PN), monté en outre mobile à pivotement autour d'un second axe pivot (YY') à l'intérieur d'une plage de déplacement (P1), de manière guidée en déplacement sur une partie de cette plage de déplacement (P1), pour le passage dudit levier (7) d'un état actif à un état inactif dans lequel tout déplacement à pivotement du levier (7) autour du premier axe pivot (XX') est empêché, le premier capteur (8) étant un capteur de détection d'au moins une position ou plage de positions du levier (7) associé à l'intérieur de cette plage de déplacement (P1), cette position ou plage de positions formant une zone de position (ZP) du levier (7) dans laquelle tout déplacement à pivotement autour du premier axe pivot (XX') du levier (7), qui est guidé en déplacement, est empêché, chaque dispositif (6) de commande comprenant un second capteur (9) de détection de la position angulaire dudit levier (7) associé autour dudit premier axe pivot (XX'), une mémoire (10) de stockage de la position neutre (PN) dudit levier (7) et une unité de commande (11) configurée pour acquérir les données dudit second capteur (9) et, à l'état actif du levier, commander la vitesse et le sens de rotation du moteur (5) associé en fonction des données du second capteur (9) et de la position neutre (PN) mémorisée, **caractérisé en ce que** l'engin (1) comprend au moins un mode de fonctionnement d'étalonnage, dans lequel l'unité de commande (11) est configurée pour commander une mémorisation de la position neutre (PN) correspondant à une donnée fournie par le second capteur (9) au moins en fonction des données fournies par le premier capteur (8).

2. Engin (1) roulant selon la revendication 1, **caractérisé en ce que** l'unité de commande (11) est configurée pour, dans le mode de fonctionnement d'étalonnage, commander une mémorisation de la position neutre (PN) correspondant à une donnée fournie par le second capteur (9) lorsque le levier (7) est dans la zone de position (ZP) détectée par le premier capteur (8).

3. Engin (1) roulant selon la revendication 1 ou 2, **caractérisé en ce que** l'unité de commande (11) est configurée pour, dans le mode de fonctionnement d'étalonnage, commander une mémorisation de la position neutre (PN) correspondant à une donnée fournie par le second capteur (9) lorsque le levier (7) est déplacé dans le sens d'une sortie et/ou d'une entrée de la zone de position (ZP) détectée par le premier capteur (8).

4. Engin (1) roulant selon l'une quelconque des revendications 1 à 3, **caractérisé en ce que** l'unité de commande (11) est configurée pour, dans le mode de fonctionnement d'étalonnage, commander une mémorisation de la position neutre (PN) correspondant à une donnée fournie par le second capteur (9) au moins en fonction des données fournies par le premier capteur (8) ; et l'unité de commande (11) est configurée pour commander ladite mémorisation si la donnée fournie par le second capteur (9) correspond à une valeur de position angulaire du levier (7) différente de la valeur de la position neutre précédemment mémorisée.

5. Engin (1) roulant selon l'une quelconque des revendications 1 à 4, **caractérisé en ce que** le mode de fonctionnement d'étalonnage est un mode activable/désactivable.

6. Engin (1) roulant selon la revendication 5, **caractérisé en ce que** l'unité de commande (11) est configurée pour, suite à un démarrage de l'engin (1) et à l'état activé du mode de fonctionnement d'étalonnage :
- détecter, en fonction des données fournies par le premier capteur (8), la position du levier (7) par rapport à la zone de position (ZP),
- mémoriser, lorsque le levier (7) est dans la zone de position (ZP) ou est déplacé dans le sens d'une sortie et/ou d'une entrée de la zone de position (ZP), la position neutre (PN) correspondant à une donnée fournie par le second capteur (9) au moins si la donnée fournie par le second capteur (9) correspond à une valeur de la position angulaire du levier (7) différente de la position neutre mémorisée
- désactiver ledit mode de fonctionnement d'étalonnage.

7. Engin (1) roulant selon l'une quelconque des revendications 1 à 6, **caractérisé en ce que** le levier (7) étant, à l'état actif, monté pour être mobile depuis une position neutre (PN) par pivotement autour du premier axe pivot (XX') suivant une première direction, qui est une direction en marche avant, jusqu'à une position de fin de course en marche avant pour une commande d'entraînement en marche avant à une vitesse variable du moteur (5) associé fonction de la position angulaire du levier (7) par rapport à la position neutre (PN) et suivant une seconde direction, qui est une direction en marche arrière, opposée à la première direction jusqu'à une position de fin de course en marche arrière pour une commande d'entraînement en marche arrière à une vitesse variable du moteur (5) associé fonction de la position angulaire du levier (7) par rapport à la position neutre (PN), l'engin (1) comprend au moins une mémoire (13) de stockage de la position de fin de course marche avant du levier (7) et une mémoire de stockage (14) de la position de fin de course marche arrière du levier (7) ; et l'unité de commande (11) est configurée pour, en fonction de la position neutre (PN) et des positions de fin de course marche avant et marche arrière mémorisées, établir une courbe de la vitesse de rotation du moteur (5) en fonction de la position angulaire du levier (7).

8. Engin (1) roulant selon l'une quelconque des revendications 1 à 7, **caractérisé en ce que** la position neutre (PN), qui est disposée sur la trajectoire suivie par le levier (7), à l'état entraîné en déplacement à pivotement dudit levier autour du second axe pivot (YY') pour le passage de l'état actif à l'état inactif, correspond à la position de fin de course du levier (7) à l'état entraîné en déplacement du levier (7) à pivotement autour du second axe pivot (YY') pour le passage de l'état inactif à l'état actif.

9. Engin (1) roulant selon l'une quelconque des revendications 1 à 8, **caractérisé en ce que** chaque dispositif (6) de commande comprend un carter (15) de protection partielle du levier (7) associé dans lequel sont ménagés deux chemins (16, 17) de guidage du levier (7), ces chemins (16, 17) de guidage formant entre eux un T avec l'une des branches dite une première branche du T formant le chemin (16) de guidage du levier (7) correspondant à la partie de la plage (P1) de déplacement du levier (7) au niveau de laquelle le levier (7) est guidé en déplacement à l'état entraîné du levier (7) autour du second axe pivot (YY') et l'autre branche du T formant le chemin (17) de guidage du levier (7) à l'état entraîné du levier autour du premier axe pivot (XX'), lesdits chemins (16, 17) de guidage étant configurés de sorte que tout déplacement à pivotement du levier (7) autour du premier axe pivot (XX') est empêché à l'état positionné du levier (7) dans le chemin (16) de guidage formé par la première branche du T, et ledit levier (7) à l'état inactif étant disposé dans ce premier chemin (16) de guidage.

10. Engin (1) roulant selon l'une quelconque des revendications 1 à 9, **caractérisé en ce que** le châssis (2) comprend une extrémité avant (18) et une extrémité arrière (19) et un axe longitudinal (ZZ') s'étendant depuis l'extrémité avant (18) en direction de l'extrémité arrière (19), **en ce que** le premier axe pivot (XX') du levier (7) de chaque dispositif (6) de commande s'étend perpendiculairement à l'axe longitudinal (ZZ') du châssis (2) et le second axe pivot (YY') du levier (7) de chaque dispositif (6) de commande s'étend parallèlement à l'axe longitudinal (ZZ') du châssis (2).

11. Engin (1) roulant selon l'une quelconque des revendications 1 à 10, **caractérisé en ce que** pour chaque dispositif (6) de commande, les premier et second axes pivot (XX', YY') du levier (7) du dispositif (6) de commande sont sensiblement orthogonaux entre eux.

12. Engin (1) roulant selon l'une quelconque des revendications 1 à 11, **caractérisé en ce que** les premier et second axes pivot (XX', YY') du levier (7) de l'un des dispositifs (6) de commande sont respectivement sensiblement parallèles aux premier et second axes pivot (XX', YY') du levier (7) de l'autre des dispositifs (6) de commande.

13. Engin (1) roulant selon l'une quelconque des revendications 1 à 12, **caractérisé en ce que** pour au moins l'un des dispositifs (6) de commande, le premier capteur (8) est un capteur de proximité avec lequel le levier (7) est, à l'état inactif, en contact d'appui en position de fin de course à l'intérieur de la plage de déplacement (P1), et le second capteur (9) est un potentiomètre.

## Patentansprüche

1. Fahrzeug (1) mit einem Fahrgestell (2), das mit mindestens einem Paar Antriebsrädern (3) ausgestattet ist, sowie einem System (4) zur Steuerung des Drehantriebs der Antriebsräder des Paares oder mindestens eines der Paare von Antriebsrädern (3), wobei das Steuersystem (4) mindestens zwei Motoren (5) und eine Steuervorrichtung (6) für jeden Motor (5) aufweist, wobei einer der Motoren (5) den Drehantrieb eines der Räder des Paares von Antriebsrädern (3) bewirken kann und der andere der Motoren (5) den Drehantrieb des anderen Antriebsrades (3) des Paares von Antriebsrädern bewirken kann, wobei jede Steuervorrichtung (6) einen Hebel (7) zur Steuerung der Drehrichtung und der Drehzahl des der Steuervorrichtung (6) zugeordneten Motors (5) sowie einen ersten Sensor (8) aufweist, wobei der Hebel (7) ein Schwenkhebel mit einem aktiven und einem inaktiven Zustand ist, wobei der Hebel (7) im aktiven Zustand so angeordnet ist, dass er aus einer sogenannten Neutralstellung (PN) durch Schwenken um eine erste Schwenkachse (XX') in einer ersten Richtung, die eine Vorwärtsfahrrichtung ist, für eine Vorwärtsantriebssteuerung bei variabler Drehzahl des zugehörigen Motors (5), und in einer zweiten Richtung, die eine Rückwärtsfahrrichtung ist und der ersten Richtung entgegengesetzt ist, für eine Rückwärtsantriebssteuerung bei variabler Drehzahl des zugehörigen Motors (5) bewegt werden kann, wobei dieser Hebel (7) im aktiven Zustand und in der Neutralstellung (PN) zudem schwenkbar um eine zweite Schwenkachse (YY') innerhalb eines Bewegungsbereichs (P1) so angeordnet ist, dass er auf einem Teil dieses Bewegungsbereichs (P1) geführt werden kann, um den Hebel (7) von einem aktiven in einen inaktiven Zustand zu überführen, in dem jede Schwenkbewegung des Hebels (7) um die erste Schwenkachse (XX) verhindert wird, wobei der erste Sensor (8) ein Sensor zur Erfassung mindestens einer Position oder eines Positionsbereichs des zugehörigen Hebels (7) innerhalb dieses Bewegungsbereichs (P1) ist, wobei diese Position oder dieser Positionsbereich einen Positionsbereich (ZP) des Hebels (7) bildet, in dem jede Schwenkbewegung um die erste Schwenkachse (XX') des bewegungsgeführten Hebels (7) verhindert wird, wobei jede Steuervorrichtung (6) einen zweiten Sensor (9) zur Erfassung der Winkelposition des zugehörigen Hebels (7) um die erste Schwenkachse (XX') aufweist, einen Speicher (10) zur Speicherung der Neutralstellung (PN) des Hebels (7) und eine Steuereinheit (11), die so ausgelegt ist, dass sie die Daten des zweiten Sensors (9) erfasst und im aktiven Zustand des Hebels die Drehzahl und die Drehrichtung des zugehörigen Motors (5) in Abhängigkeit von den Daten des zweiten Sensors (9) und der gespeicherten Neutralstellung (PN) steuert, **dadurch gekennzeichnet, dass** das Fahrzeug (1) mindestens einen Betriebsmodus zur Kalibrierung aufweist, in dem die Steuereinheit (11) so ausgelegt ist, dass sie eine Speicherung der Neutralstellung (PN) entsprechend einem vom zweiten Sensor (9) gelieferten Wert zumindest in Abhängigkeit der vom ersten Sensor (8) gelieferten Werte steuert.

2. Fahrzeug (1) nach Anspruch 1, **dadurch gekennzeichnet, dass** die Steuereinheit (11) so ausgelegt ist, dass sie im Betriebsmodus zur Kalibrierung eine Speicherung der Neutralstellung (PN) steuert, die einem vom zweiten Sensor (9) gelieferten Wert entspricht, wenn sich der Hebel (7) in dem vom ersten Sensor (8) erfassten Positionsbereich (ZP) befindet.

3. Fahrzeug (1) nach Anspruch 1 oder 2, **dadurch gekennzeichnet, dass** die Steuereinheit (11) so ausgelegt ist, dass sie im Betriebsmodus zur Kalibrierung eine Speicherung der Neutralstellung (PN) steuert, die einem vom zweiten Sensor (9) gelieferten Wert entspricht, wenn der Hebel (7) in Richtung eines Verlassens und/oder eines Eintretens des vom ersten Sensor (8) erfassten Positionsbereichs (ZP) bewegt wird.

4. Fahrzeug (1) nach einem der Ansprüche 1 bis 3, **dadurch gekennzeichnet, dass** die Steuereinheit (11) so ausgelegt ist, dass sie im Betriebsmodus zur Kalibrierung eine Speicherung der Neutralstellung (PN) steuert, die einem vom zweiten Sensor (9) gelieferten Wert entspricht, zumindest in Abhängigkeit von den vom ersten Sensor (8) gelieferten Wert; und dass die Steuereinheit (11) so ausgelegt ist, dass sie das Speichern steuert, wenn der vom zweiten Sensor (9) gelieferte Wert einem Winkelpositionswert des Hebels (7) entspricht, der sich von dem zuvor gespeicherten Wert der Neutralstellung unterscheidet.

5. Fahrzeug (1) nach einem der Ansprüche 1 bis 4, **dadurch gekennzeichnet, dass** der Betriebsmodus zur Kalibrierung ein aktivierbarer/deaktivierbarer Modus ist.

6. Fahrzeug (1) nach Anspruch 5, **dadurch gekennzeichnet, dass** die Steuereinheit (11) so ausgelegt ist, dass sie nach dem Starten des Fahrzeugs (1) und bei aktiviertem Betriebsmodus zur Kalibrierung:
- auf der Grundlage der vom ersten Sensor (8) gelieferten Werte die Position des Hebels (7) relativ zum Positionsbereich (ZP) erfasst,
- wenn sich der Hebel (7) im Positionsbereich (ZP) befindet oder in Richtung eines Verlassens und/oder eines Eintretens des Positionsbereichs (ZP) bewegt wird, die Neutralstellung (PN) entsprechend einem vom zweiten Sensor (9) gelieferten Wert, zumindest wenn der vom zweiten Sensor (9) gelieferte Wert einem Wert der Winkelstellung des Hebels (7) entspricht, der sich von der gespeicherten Neutralstellung unterscheidet, speichert,
- den Betriebsmodus zur Kalibrierung deaktiviert.

7. Fahrzeug (1) nach einem der Ansprüche 1 bis 6, **dadurch gekennzeichnet, dass** der Hebel (7) im aktiven Zustand so angeordnet ist, dass er aus einer Neutralstellung (PN) durch Schwenken um die erste Schwenkachse (XX') in einer ersten Richtung, die eine Vorwärtsfahrrichtung ist, bis zu einer Vorwärts-Endposition für eine Vorwärtsantriebssteuerung bei variabler Drehzahl des zugehörigen Motors (5) in Abhängigkeit von der Winkelstellung des Hebels (7) relativ zur Neutralstellung (PN) und in einer zweiten Richtung, die eine Rückwärtsfahrrichtung ist und der ersten Richtung entgegengesetzt ist, bis zu einer Rückwärts-Endposition für eine Rückwärtsantriebssteuerung bei variabler Drehzahl des zugehörigen Motors (5) in Abhängigkeit von der Winkelstellung des Hebels (7) relativ zur Neutralstellung (PN) bewegt werden kann, wobei das Fahrzeug (1) mindestens einen Speicher (13) zur Speicherung der Endposition des Hebels (7) bei Vorwärtsfahrt und einen Speicher (14) zur Speicherung der Endposition des Hebels (7) bei Rückwärtsfahrt aufweist; und die Steuereinheit (11) so ausgelegt ist, dass sie in Abhängigkeit von der Neutralstellung (PN) und den gespeicherten Endpositionen für Vorwärts- und Rückwärtsfahrt eine Kurve der Drehzahl des Motors (5) in Abhängigkeit von der Winkelstellung des Hebels (7) erstellt.

8. Fahrzeug (1) nach einem der Ansprüche 1 bis 7, **dadurch gekennzeichnet, dass** die Neutralstellung (PN), die auf der vom Hebel (7) zurückgelegten Bahn angeordnet ist, im Zustand, in dem der Hebel um die zweite Schwenkachse (YY') zur Umschaltung vom aktiven in den inaktiven Zustand geschwenkt wird, der Endposition des Hebels (7) im Zustand entspricht, in dem der Hebel (7) um die zweite Schwenkachse (YY') für den Übergang vom inaktiven in den aktiven Zustand geschwenkt wird.

9. Fahrzeug (1) nach einem der Ansprüche 1 bis 8, **dadurch gekennzeichnet, dass** jede Steuervorrichtung (6) ein Gehäuse (15) zum teilweisen Schutz des zugehörigen Hebels (7) aufweist, in dem zwei Führungswege (16, 17) für den Hebel (7) ausgebildet sind, wobei diese Führungswege (16, 17) untereinander ein T bilden, wobei einer der Schenkel, der als erster Schenkel des T bezeichnet wird, den Führungsweg (16) für den Hebel (7) bildet, der dem Teil des Bewegungsbereichs (P1) des Hebels (7) entspricht, in dem der Hebel (7) im angetriebenen Zustand des Hebels (7) um die zweite Schwenkachse (YY') geführt wird, und wobei der andere Schenkel des T den Führungsweg (17) für den Hebel (7) im angetriebenen Zustand des Hebels um die erste Schwenkachse (XX') bildet, wobei die Führungswege (16, 17) so ausgebildet sind, dass jede Schwenkbewegung des Hebels (7) um die erste Schwenkachse (XX') im positionierten Zustand des Hebels (7) in dem durch den ersten Schenkel des T gebildeten Führungsweg (16) verhindert wird, und wobei der Hebel (7) im inaktiven Zustand in diesem ersten Führungsweg (16) angeordnet ist.

10. Fahrzeug (1) nach einem der Ansprüche 1 bis 9, **dadurch gekennzeichnet, dass** das Fahrgestell (2) ein vorderes Ende (18) und ein hinteres Ende (19) sowie eine Längsachse (ZZ') aufweist, die sich vom vorderen Ende (18) in Richtung des hinteren Endes (19) erstreckt, und dass die erste Schwenkachse (XX') des Hebels (7) jeder Steuervorrichtung (6) senkrecht zur Längsachse (ZZ') des Fahrgestells (2) verläuft und die zweite Schwenkachse (YY') des Hebels (7) jeder Steuervorrichtung (6) parallel zur Längsachse (ZZ') des Fahrgestells (2) verläuft.

11. Fahrzeug (1) nach einem der Ansprüche 1 bis 10, **dadurch gekennzeichnet, dass** bei jeder Steuervorrichtung (6) die erste und die zweite Schwenkachse (XX', YY') des Hebels (7) der Steuervorrichtung (6) im Wesentlichen senkrecht zueinander stehen.

12. Fahrzeug (1) nach einem der Ansprüche 1 bis 11, **dadurch gekennzeichnet, dass** die erste und zweite Schwenkachse (XX', YY') des Hebels (7) von einer der Steuervorrichtungen (6) im Wesentlichen parallel zur ersten bzw. zweiten Schwenkachse (XX', YY') des Hebels (7) von der anderen der Steuervorrichtungen (6) verlaufen.

13. Fahrzeug (1) nach einem der Ansprüche 1 bis 12, **dadurch gekennzeichnet, dass** bei mindestens einer der Steuervorrichtungen (6) der erste Sensor (8) ein Näherungssensor ist, mit dem der Hebel (7) im inaktiven Zustand in der Endposition innerhalb des Bewegungsbereichs (P1) in Anlage steht, und der zweite Sensor (9) ein Potentiometer ist.

## Claims

1. Rolling vehicle (1) comprising a chassis (2) equipped with at least one pair of drive wheels (3) and a system (4) controlling the rotational driving of the drive wheels of the or of at least one of the pairs of drive wheels (3), said control system (4) comprising at least two motors (5) and a control device (6) for each motor (5), said motors (5) being capable of allowing, for one, the rotational driving of one of the drive wheels (3), and for the other, the rotational driving of the other of the drive wheels (3) of the pair of drive wheels, each control device (6) comprising a lever (7) controlling the direction of rotation and the speed of rotation of the motor (5) associated with said control device (6) and a first sensor (8), said lever (7) being a pivoting lever with an active state and an inactive state, said lever (7) being, in the so-called active state, mounted, from a so-called neutral position (PN), to be mobile by pivoting about a first pivot axis (XX') in a first, so-called forward direction, for a forward drive control at a variable speed of the associated motor (5), and in a second, so-called reverse direction, opposite the first direction, for a reverse drive control at a variable speed of the associated motor (5), this lever (7) being, in the active state and in neutral position (PN), further mounted to be mobile by pivoting about a second pivot axis (YY') within a range of displacement (P1), in a way that is guided in displacement over a part of this range of displacement (P1), for the switching of said lever (7) from an active state to an inactive state in which any pivoting displacement of the lever (7) about the first pivot axis (XX') is prevented, the first sensor (8) being a sensor for detecting at least one position or range of positions of the associated lever (7) within this range of displacement (P1), this position or range of positions forming a position zone (ZP) of the lever (7) in which any pivoting displacement about the first pivot axis (XX') of the lever (7), which is guided in displacement, is prevented,
each control device (6) comprising a second sensor (9) for detecting the angular position of said associated lever (7) about said first pivot axis (XX'), a memory (10) for storing the neutral position (PN) of said lever (7) and a control unit (11) configured to acquire the data from said second sensor (9) and to, in the active state of the lever (7), control the speed and the direction of rotation of the associated motor (5) as a function of the data from the second sensor (9) and of the stored neutral position (PN), **characterized in that in that** the vehicle (1) comprises at least one operating calibration mode in which the control unit (11) is configured to order a storage of the neutral position (PN) corresponding to a datum supplied by the second sensor (9) at least as a function of the data supplied by the first sensor (8).

2. Rolling vehicle (1) according to Claim 1, **characterized in that** the control unit (11) is configured to, in the so-called calibration operating mode, order a storage of the neutral position (PN) corresponding to a datum supplied by the second sensor (9) when the lever (7) is in the position zone (ZP) detected by the first sensor (8).

3. Rolling vehicle (1) according to one of Claims 1 and 2, **characterized in that** the control unit (11) is configured to, in the so-called calibration operating mode, order a storage of the neutral position (PN) corresponding to a datum supplied by the second sensor (9) when the lever (7) is displaced in the direction of an exit from and/or entry into the position zone (ZP) detected by the first sensor (8).

4. Rolling vehicle (1) according to one of Claims 1 to 3, **characterized in that** the control unit (11) which is configured to, in the so-called calibration operating mode, order a storage of the neutral position (PN) corresponding to a datum supplied by the second sensor (9) at least as a function of the data supplied by the first sensor (8), is configured to order said storage if the datum supplied by the second sensor (9) corresponds to an angular position value of the lever (7) that is different from the value of the neutral position previously stored.

5. Rolling vehicle (1) according to one of Claims 1 to 4, **characterized in that** the so-called calibration operating mode is an activatable/deactivatable mode.

6. Rolling vehicle (1) according to Claim 5, **characterized in that** the control unit (11) is configured to, following a start-up of the vehicle (1) and when the calibration operating mode is in the activated state:
- detect, as a function of the data supplied by the first sensor (8), the position of the lever (7) with respect to the position zone (ZP),
- store, when the lever (7) is in the position zone (ZP) or is displaced in the direction of an exit from and/or of an entry into the position zone (ZP), the neutral position (PN) corresponding to a datum supplied by the second sensor (9) at least if the datum supplied by the second sensor (9) corresponds to a value of the angular position of the lever (7) that is different from the stored neutral position,
- deactivate said calibration operating mode.

7. Rolling vehicle (1) according to one of Claims 1 to 6, **characterized in that**, the lever (7) being, in the active state, mounted from a neutral position (PN) to be movable by pivoting about the first pivot axis (XX') in a first direction, called forward, to a forward end-of-travel position for a forward driving control at a variable speed of the associated motor (5) as a function of the angular position of the lever (7) with respect to the neutral position (PN) and in a second direction, called reverse, opposite the first direction, to a reverse end-of-travel position for a reverse driving control at a variable speed of the associated motor (5) as a function of the angular position of the lever (7) with respect to the neutral position (PN), the vehicle (1) comprises at least one memory (13) for storing the forward end-of-travel position of the lever (7) and a memory (14) for storing the reverse end-of-travel position of the lever (7) and **in that** the control unit (11) is configured to, as a function of the neutral position (PN) and of the stored forward and reverse end-of-travel positions, establish a curve of the speed of rotation of the motor (5) as a function of the angular position of the lever (7).

8. Rolling vehicle (1) according to one of Claims 1 to 7, **characterized in that** the neutral position (PN), which is arranged on the trajectory followed by the lever (7), in the state driven in displacement by pivoting of said lever about the second pivot axis (YY') for the switch from the active state to the inactive state, corresponds to the end-of-travel position of the lever (7) in the state of the lever (7) driven in displacement by pivoting about the second pivot axis (YY') for the switch from the inactive state to the active state.

9. Rolling vehicle (1) according to one of Claims 1 to 8, **characterized in that** each control device (6) comprises a partial protection casing (15) of the associated lever (7) in which there are formed two paths (16, 17) for guiding the lever (7), these guiding paths (16, 17) forming a T between them with one of the branches, called first branch of the T, forming the path (16) for guiding the lever (7) corresponding to the part of the range (P1) of displacement of the lever (7) at which the lever (7) is guided in displacement in the state of the lever (7) driven about the second pivot axis (YY') and the other branch of the T forming the path (17) for guiding the lever (7) in the state of the lever driven about the first pivot axis (XX'), said guiding paths (16, 17) being configured such that any displacement by pivoting of the lever (7) about the first pivot axis (XX') is prevented in the state of the lever (7) positioned in the guiding path (16) formed by the first branch of the T, said lever (7) being in the inactive state arranged in this first guiding path (16).

10. Rolling vehicle (1) according to one of Claims 1 to 9, **characterized in that** the chassis (2) comprises a front end (18) and a rear end (19) and a longitudinal axis (ZZ') extending from the front end (18) towards the rear end (19), **in that** the first pivot axis (XX') of the lever (7) of each control device (6) extends transversely to the longitudinal axis (ZZ') of the chassis (2) and the second pivot axis (YY') of the lever (7) of each control device (6) extends parallel to the longitudinal axis (ZZ') of the chassis (2).

11. Rolling vehicle (1) according to one of Claims 1 to 10, **characterized in that**, for each control device (6), the first and second pivot axes (XX', YY') of the lever (7) of the control device (6) are substantially orthogonal to one another.

12. Rolling vehicle (1) according to one of Claims 1 to 11, **characterized in that** the first and second pivot axes (XX', YY') of the lever (7) of one of the control devices (6) are respectively substantially parallel to the first and second pivot axes (XX', YY') of the lever (7) of the other of the control devices (6).

13. Rolling vehicle (1) according to one of Claims 1 to 12, **characterized in that**, for at least one of the control devices (6), the first sensor (8) is a proximity sensor with which the lever (7) is, in the inactive state, in bearing contact in the end-of-travel position within the range of displacement (P1) and **in that** the second sensor (9) is a potentiometer.
